# EUROPEAN PATENT APPLICATION

(11) **EP 3 788 883 A1**
(43) Date of publication of application: **10.03.2021**
(21) Application number: 20194649.8
(22) Date of filing: 04.09.2020
(51) Int. Cl.: A23C 19/09, A23C 19/093

(54) **METHOD OF MANUFACTURING A CHEESE PRODUCT**

(30) Priority: 04.09.2019 NL 2023763
(71) Applicant: Tristan Fine Food, 4817 SE Breda (NL)
(72) Inventor: Siegmund, Laurentius Louis Johannes Maria, 4817 SE BREDA (NL)
(74) Representative: Arnold & Siedsma

(57) **Abstract**

Method of manufacturing a cheese product comprising a specified ripened cheese and a non-cheese additional ingredient, the method comprising the steps of:
- providing the cheese;
- providing the additional ingredient;
- heating at least the cheese to a first temperature;
- mixing the cheese with the additional ingredient to obtain a substantially homogeneous mixture; and
- cooling the mixture to a second temperature,
wherein the first temperature is selected in the range of 70°C to 100°C, preferably 70°C to 95°C, based on the hardness of the cheese to thereby bring the cheese in a spreadable state .

## Description

The invention relates to a method of manufacturing a cheese product comprising cheese and an additional ingredient. The invention also relates to the cheese product manufactured according to the method of the invention and a container containing this cheese product.

Cheese in its various forms is known as an important constituent of the human diet. It is generally produced from mammalian milk with rennet and lactic acid bacteria. Each form of cheese, and even each individual cheese, possesses distinctive features. Its flavour is recognised as one of the most notable of these distinctive features. Both artisanal and industrial manufacturers of cheese have gone through great effort to develop cheeses of constant quality and with properties that distinguish it from other cheeses. This has resulted in the particularly rich and varied flavour palette of cheese on offer today. This has, for instance, been recognised through various sorts of identification and protection measures, including geographical indications, protected origin designations and stringent quality standards.

A number of problems are known to exist in cheeses as currently available. These problems include a limited storability and processing difficulties which jointly restrict the use of cheese in meal dishes. In practice, cheese is therefore mostly used in either its original form or as a processed product that has lost all of its distinctive characteristics.

Because of its distinctive flavour and other characteristics, there is a generally perceived desire to use cheese in meals, dishes and recipes while preserving its distinctive flavour. However, the versatility of cheese is inherently limited, since most types of cheese are not easily processed due to their physical characteristics. Moreover, storage of cheese results in a deterioration of its characteristics due to too much ripening (also known as ageing) and possibly also drying, overgrowing of mould and rotting. Conventional storage methods, such as vacuum sealing and refrigeration, do not eliminate these processes, while freezing is known to cause a loss of moisture as well as a deterioration of the cheese texture. Freezing even causes curds and whey to separate, disintegrating the cheese altogether.

It is an object of the invention to increase the versatility of a cheese while preserving the distinctive flavour of that cheese. Being able to provide such cheese would broaden the versatility of cheeses for use in meals, dishes and recipes by cooks working in kitchens of restaurants, catering facilities and similar environments where requirements of large-scale efficiency currently limit the use of cheese at present.

The invention relates to a method of manufacturing a cheese product as defined in claim 1. According to the invention, a specified ripened cheese is heated to a first temperature in the range of 70°C to 100°C, preferably 70°C to 95°C based on the hardness of the cheese. This brings the cheese in a spreadable state to allow mixing with the additional ingredient to be completed in a shortened time while preserving characteristic flavours of the specified ripened cheese in the final cheese product. The temperature range is particularly favourable because lower temperatures would require longer mixing times and thus longer heating times, which usually leads to more pronounced loss of characteristic flavours even though the heating temperature is lower. Further, too low temperatures may permit alterations of the flavours in the cheese product due to over-ripening, particularly when below pasteurisation temperatures. The first temperature is therefore selected at or above pasteurisation temperatures. At the same time, the first temperature is selected to be lower than 100°C. Higher temperatures, particularly when above 100°C, have the disadvantage that these directly lead to deterioration of flavour compounds and alteration of composition, for example due to separation of cheese fat from the cheese and due to evaporation. Maintaining the cheese emulsion and avoiding the separation of its fat components is particularly advantageous for obtaining the homogeneous mixture of the cheese with the additional ingredient. The versatility and processability of the cheese product are thereby enhanced relative to the characteristic, specified ripened cheese it is manufactured from while at the same time conserving its characteristic flavour.

The cheese product is of an increased versatility in comparison to the cheese it is made with, due to its enhanced processing and storing characteristics while maintaining the distinctive characteristics of the cheese with which the cheese product is manufactured. Furthermore, the cheese product may be frozen and thawed again to obtain the cheese product as originally manufactured without loss of its distinctive characteristics, including its flavour.

The cheese product may be obtained after cooling the mixture. The cheese may be made from milk of any mammalian species or a mixture thereof. The cheese may further be any type of cheese, for instance hard-type cheese, soft-type cheese or fresh cheese. Although it is conceivable that the cheese is a fresh unaged cheese to form an ingredient for, for example, a cheese cake, a more preferred embodiment of the invention comprises ripened cheese. Ripened cheese, for example hard cheeses and soft cheeses, has more flavour and adds to the characteristics of the cheese product.

The additional ingredient may serve to lower the viscosity of the cheese. A highly viscous cheese may hamper processing of the cheese, thus reducing its versatility. Combining a cheese of high viscosity with a suitable additional ingredient of low viscosity, results in a cheese product with a lower viscosity than the cheese. The resulting cheese product is thus made to be more readily processed, in other words more versatile, than the cheese.

The invention further relates to a cheese product manufactured according to the method of the invention. Such cheese product has the advantages of being more versatile, better processable, better storable and better freezable compared to the cheese it is manufactured with. When the cheese product is additionally aerated, the cheese product is even better freezable, i.e. the cheese product may be frozen, stored and thawed (even repeatedly) while maintaining its consistency and flavour.

The invention finally relates to a container containing the cheese product manufactured according to the method of the invention. A container containing the cheese product further increases the versatility of the cheese product and makes it even better storable and freezable. For instance, a container may reduce evaporation of constituents of the cheese product, prevent contamination and enhance the versatility of the cheese product for a cook in preparing a recipe, dish or meal.

Preferred embodiments are the subject of dependent claims.

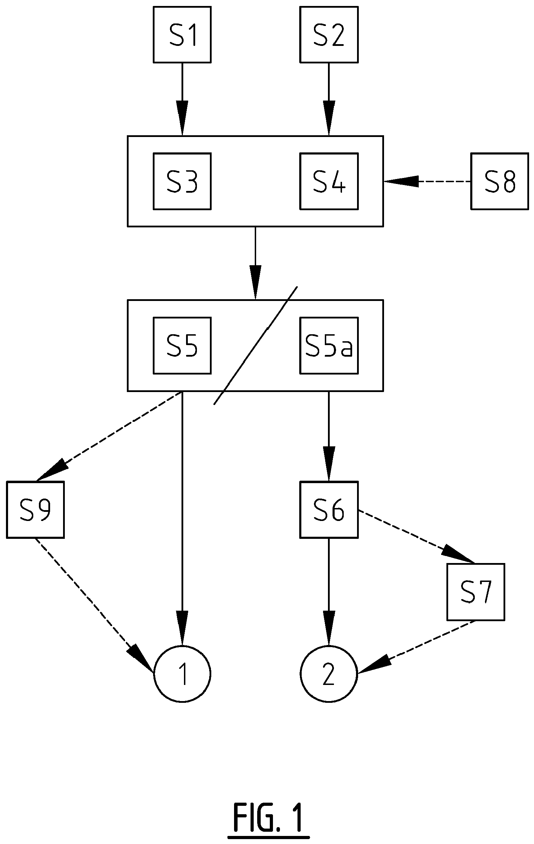

The invention is further illustrated with the appended figure, which shows a flow diagram illustrating method steps according to embodiments of the invention.

The figure shows a method of manufacturing a cheese product 1 comprising cheese and an additional ingredient. This method comprises the following steps:
S1 is the step of providing the cheese;
S2 is the step of providing the additional ingredient;
S3 is the step of heating at least the cheese to a first temperature;
S4 is the step of mixing the cheese with the additional ingredient to obtain a mixture; and
S5 is the step of cooling the mixture.

In a preferred embodiment of the invention, the cheese product 1 is an ingredient configured to mimic the flavour of the cheese. The cheese product 1 may thus serve as a more versatile substitute of the cheese. The cheese product 1 serves to maintain the flavour of the cheese close to the original flavour of the cheese while combining it with an ease of processing of, for instance, a cream-like product.

In a further preferred embodiment of the invention, the additional ingredient comprises natural ingredients. According to the invention, no additives are needed to produce a versatile cheese product 1 that can be processed and stored, including being frozen and thawed. In particular, melting salts are to be excluded from the additional ingredient as these deteriorate the distinctive flavour of the cheese in the cheese product 1. Melting salts are commonly used in manufacturing methods of cream cheeses. For cream cheeses, a bland flavour is generally desired as these are made of left-over cheeses and mixtures thereof. In contrast to this, the invention preferably relates to use of a single distinctive cheese and a preservation of its flavour in a versatile cheese product 1.

In a further preferred embodiment of the invention, the step S5 of cooling the mixture comprises the following steps:
S5a, the step of cooling the mixture to a second temperature; and
S6, the step of packaging the cheese product 1 into containers 2.

Cooling the mixture to a second temperature, may be performed before the cheese product 1 is packaged into containers 2. The cheese product 1 may then be obtained after step S5a and before step S6. Alternatively, the mixture may also be packaged into containers 2 before or as soon as the step of cooling the mixture commences. That is, step S6 may be performed before step S5a. The invention is therefore not limited to the order in which these steps are presented.

Packaging the cheese product 1 has the advantages that a container 2 containing the cheese product 1 further increases the versatility of the cheese product 1 and makes it even better storable and freezable. For instance, a container 2 may reduce evaporation of constituents of the cheese product 1 and prevent contamination. A container 2 further facilitates transportation, portioning and handling, thus increasing the versatility of the cheese product for the cook using the same. The container 2 may take various forms, such as a bucket with lid, a prefabricated pastry bag, a dosing unit, a blister package, a spray can, a shaped mould, a plastic bag and/or a compartmentalised tray, depending on the intended application of the cheese product. The container 2 may be sealed after it has been filled with the cheese product 1 and may be resealable.

In a further preferred embodiment of the invention, the second temperature is in a range of 30°C to 50°C. This temperature range ensures that the mixture is sufficiently viscous for packaging into containers 2 so that the processing speed of the mixture remains sufficiently high. In a more preferred embodiment of the invention, the second temperature is about 40°C. At this temperature, the mixture is still of sufficiently low viscosity to readily package the cheese product 1, while cooling down to that temperature has not been hampered by a possibly insolating container 2. In other embodiments, the mixture is not packaged at the second temperature but other process steps are performed, such as aerating the mixture to expand its volume.

In a further preferred embodiment of the invention, the step S6 of packaging the cheese product 1 into containers 2 is followed by a step S7 of cooling the containers 2 containing the cheese product 1 to a third temperature that is lower than the second temperature. The third temperature may be lower than the second temperature by at least 15°C. This improves conservation of the cheese product 1. Preferably, the third temperature is below 0°C. At this point, the container 2 containing the cheese product 1 may thus be frozen. This further increases the versatility of the cheese product 1.

In a further preferred embodiment of the invention, the step S1 of providing the cheese comprises providing a ripened cheese. A ripened cheese is known to contain especially pronounced characteristic flavours compared to unripened cheese, also known as fresh cheese. Ripened cheese is further characterised by an exceedingly low versatility. The invention thus proves especially advantageous with ripened cheese. Further, the cheese may be provided inclusive of its rind, when edible, to impart additional flavour to the cheese product.

The step S1 of providing the cheese may comprise providing a hard-type cheese. Some hard-type cheeses that may be used with the invention are commercially available under the following names: Cheshire, Emmental, Gouda, Gruyère, Pecorino and Parmesan. Further, aged or old goat milk cheese may be classified or labelled as a hard-type cheese.

Alternatively, the step S1 of providing the cheese comprises providing a soft-type cheese. Some soft-type cheeses that may be used with the invention are commercially available under the following names: Brie, Camembert, Neufchâtel, Havarti, Roquefort, Epoisses, Stilton and Munster. Further, young goat milk cheese may be classified or labelled as a soft-type cheese.

The problem of low versatility is especially pronounced with hard-type cheese as well as with soft-type cheese, as these may change markedly with age. Furthermore, one or more freezing and thawing cycles negatively affect such cheese by causing degradation of quality, flavour and structure. For instance, freezing such cheese and afterwards thawing it is known to cause crumbling and even separation of the curds and whey.

Alternatively or additionally, the step S1 of providing the cheese may comprises providing the cheese to an amount of 30% to 80%, preferably of 35% to 70% and more preferably of 40% to 60%, by weight of the cheese product 1. This range is advantageous in maintaining the distinctive flavour of the cheese in the cheese product 1 while also allowing an increased versatility.

The method of the invention may comprise a step S8 of adding salt. The salt is different from the additional ingredient, though the additional ingredient may include salt as one of its constituents.

When mixing the cheese with the additional ingredient, the relative salt content of the mixture and of the cheese product 1 may change from that of the cheese. This may be desirable to obtain a cheese product 1 of lower relative salt content compared to the cheese. This has the advantage of known health benefits and offers versatility to the cook. The cook using the cheese product 1 may add salt to obtain a desired flavour level.

Additionally, salt may be added to the cheese product 1 during manufacturing to any desired amount. The step S8 may comprise adding an amount of salt to obtain a relative salt content in the cheese product 1 that is substantially the same as a relative salt content of the cheese. When the amount of added salt is chosen such that the relative salt content of the cheese product 1 is substantially the same as that of the cheese, the cheese product 1 may mimic the flavour of the cheese.

In a further preferred embodiment of the invention, the first temperature is a temperature at which the cheese is in a spreadable state. This is advantageous for the manufacturing process of the cheese product 1. Additionally or alternatively, the first temperature may be no higher than 100°C, to prevent boiling and substantial loss of characteristics of the cheese. In an advantageous embodiment, the first temperature is in the range of 70°C to 100°C, more preferably in the range of 70°C to 95°C and most preferably in the range of 85°C to 95°C. The first temperature may be adjusted on the hardness of the cheese, wherein a soft-type cheese may be heated to about 85°C and a hard-type cheese may be heated to about 95°C. In the context of the present invention, the cheese may be assigned as a soft-type cheese or as a hard-type cheese. Preferably, the first temperature is selected in the range of 70°C to 85°C, more preferably 75°C to 85°C, for a soft-type cheese and in the range of 85°C to 100°C, more preferably 85°C to 95°C, for a hard-type cheese. For this purpose, the cheese may be classified or labelled as a soft-type cheese or as a hard-type cheese based on the hardness of the cheese. It is noted that hardness of cheeses in this context is primarily assigned on its melting characteristics, which are influenced by mechanical factors, such as viscosity and yield stress, and by chemical composition. In principle, the harder the cheese, the higher the temperature at which it is in a spreadable state. The temperature of 85°C may thus provide a defining temperature in the classification or labelling of the cheese, with soft-type cheeses being in a spreadable state below 85°C and hard-type cheeses being in a spreadable state above 85°C.

In a further preferred embodiment of the invention, the step S4 of mixing the cheese with the additional ingredient to obtain a mixture comprises mixing until the mixture is substantially homogeneous. Additionally or alternatively, the step S4 may comprise blending. The blending may be performed with a blender that is suitable for food processing. Blending is advantageous because it involves high rotational speed, thus shortening the time at which at least the cheese has to be heated in order to achieve a homogeneous mixture. This ensures that characteristic flavours of the specified ripened cheese are preserved. A combination of the first temperature in the above-mentioned ranges with blending even further aids in preserving characteristic flavours of the specified ripened cheese in the final cheese product. Any other type of high speed or high shear mixing technique may be employed, such a stand mixer with frame attachment or an extrusion device.

The method of the invention may be performed by first performing the step S3 and afterwards performing the step S4. It is equally possible to first perform the step S4 and afterwards perform the step S3. In other words, the step S4 of mixing the cheese with the additional ingredient to obtain a mixture may be performed before the step S3 of heating at least the cheese to a first temperature, and vice versa.

The method of the invention in any of the afore-mentioned embodiments may further be followed by step S9, the step of freezing the cheese product 1. At the moment of freezing, the cheese product 1 may be contained within the container 2. It is a particular advantageous feature of the invention that the cheese product 1 is freezable, which enhances the versatility of the cheese.

The step of freezing the cheese product 1 may be followed by step S10, the step of thawing the frozen cheese product 1 to obtain the cheese product 1 as manufactured. In contrast to the cheese, the cheese product 1 does not show degradation in quality due to being frozen for at least a period of four months.

The invention is not limited to particular types of additional ingredient, though a number of embodiments are presented below to further illustrate the invention and its advantageous effects. In all embodiments, the additional ingredient is a non-cheese additional ingredient. That is, the additional ingredient is different from the cheese and preferably not a cheese in itself.

In a further embodiment of the invention, the step S2 of providing the additional ingredient comprises providing at least one of a cream and a binding agent. The cream may be obtained from cow milk, goat milk, sheep milk, camel milk and other mammals. Alternatively, the cream may be of vegetable origin, i.e. a vegetable cream as vegetarian alternative. The binding agent may be gelatine or any other suitable binding agent as known in the art, such as locus bean gum, agar, arrowroot, kudzu, Irish moss and carrageenan.
In a further preferred embodiment of the invention, the step S2 may alternatively or additionally comprise providing at least one of a butter and one or more than one herb. The butter may be obtained from cow milk, goat milk, sheep milk, camel milk and other mammals. The one or more than one herb may include fresh as well as dried herbs, such as parsley, chives, mint and other herbs known in the art.

In a further preferred embodiment of the invention, the step S2 may alternatively or additionally comprise providing at least one of legumes and an oil. The legumes may be beans and/or peas such as soy beans, chick peas, peanuts or a mixture thereof. The oil may be any food-grade oil, such as olive oil, peanut oil, rapeseed oil, palm oil, walnut oil or a mixture thereof.

With any of the embodiments of the method of the invention, the step S2 of providing the additional ingredient may comprises preparing the additional ingredient. The preparing may include steps such as heating, whipping, aerating, stirring, mixing or a combination thereof. This may for instance be advantageous for the processing of the additional ingredient, the step S4 of mixing the cheese with the additional ingredient to obtain a mixture and/or the characteristics of the cheese product 1.

The invention also relates to cheese products 1 manufactured according to the method of any of the preceding embodiments. Such cheese products 1 are versatile in use through their enhanced characteristics with respect to processing as well as storing and may even be frozen and thawed without loss of the distinctive flavour of the cheese.

The invention also relates to containers 2 containing the cheese product 1 manufactured according to the method of any of the preceding embodiments. The container 2 may be of any known suitable food-grade material, in particular material that can be frozen, such as plastic buckets, sealed bags, silicone shapes and foil packaging.

With the method of the invention as described above, it is possible to produce cheese products 1, for example, cheese dessert cream, cheese butter and cheese humus or combinations thereof. Such cheese products 1 are processed more readily and can be stored better than the cheese that these cheese products 1 are made with. These cheese products 1 may even be frozen without degrading the quality of the cheese product 1, which is generally not possible with cheese.

For cheese dessert cream, the steps S1, S2, S3, S4 and S5 are essential. A particularly advantageous cheese dessert cream is produced from a ripened specified cheese by the following steps:
- providing said cheese to an amount of about 50% by final weight of the cheese dessert cream;
- providing cream to an amount of about 50% by final weight of the cheese dessert cream;
- providing salt to such an amount that the relative salt content in the cheese dessert cream is substantially the same as the relative salt content of the ripened specified cheese;
- heating the cream to a temperature of about 75°C;
- combining the ripened specified cheese, the salt and the heated cream to obtain a composition;
- heating said composition to a temperature of about 85°C;
- mixing the heated composition to obtain a mixture until the mixture is substantially homogenous; and
- cooling the homogeneous mixture to a temperature of about 2°C to obtain the cheese dessert cream.

The above method varies with the hardness of the ripened specified cheese. For harder cheeses, the step of heating the composition is preferably performed at a temperature higher than 85°C but lower than 100°C.

Optionally, the above method also involves providing a binding agent, such as gelatine, locus bean gum, agar, kudzu or carrageenan, to an amount of about 1% of the final weight of the cheese dessert cream.

For cheese butter, the steps S1, S2, S3, S4 and S5 are essential. A particularly advantageous cheese butter is produced from a ripened specified cheese by the following steps:
- providing said cheese to an amount of about 40% by final weight of the cheese butter;
- providing butter to an amount of about 55% by final weight of the cheese butter;
- providing salt to such an amount that the relative salt content in the cheese butter is substantially the same as the relative salt content of the ripened specified cheese;
- aerating the butter at about 20°C;
- heating the ripened specified cheese to a temperature of about 85°C;
- adding the heated ripened specified cheese and the salt to the aerated butter to obtain a composition;
- mixing the composition to obtain a mixture until the mixture is substantially homogenous; and
- cooling the homogeneous mixture to obtain the cheese butter.

The above method varies with the hardness of the ripened specified cheese. For harder cheeses, the step of heating the composition is preferably performed at a temperature higher than 85°C but lower than 100°C.

Optionally, the above method also involves providing a supplementary ingredient to an amount of about 5% by final weight of the cheese butter, such as one or more than one herb, brandy, beer, juice or a combination thereof. The flavour of the supplementary ingredient may be complementary, supporting or enhancing the flavour of the ripened specified cheese. Use of such supplementary ingredient widens the versatility of the ripened specified cheese as well as that of the cheese products 1 manufactured with it. The supplementary ingredient may be added to the composition, to the mixture or to the cheese butter during manufacturing of the cheese product 1. Alternatively, the supplementary ingredient may be added after manufacturing of the cheese butter, when it is used in preparing a meal.

For cheese humus, the steps S1, S2, S3, S4 and S5 are essential. A particularly advantageous cheese humus is produced from a specified ripened cheese by the following steps:
- providing said cheese to an amount of about 40% by final weight of the cheese humus;
- providing cooked chick peas to an amount of about 55% by final weight of the cheese humus and olive oil to an amount of about 5% by final weight of the cheese humus;
- providing salt to such an amount that the relative salt content in the cheese humus is substantially the same as the relative salt content of the ripened specified cheese;
- heating the cooked chick peas to a temperature of about 85°C and grinding the heated cooked chick peas with the olive oil;
- heating the specified ripened cheese to a temperature of about 85°C;
- combining the heated ripened specified cheese, the salt and the heated and ground cooked chick peas with the olive oil to obtain a composition;
- homogenising and cooling the composition to obtain a mixture until the mixture is substantially homogenous; and
- cooling the homogeneous mixture to obtain the cheese humus.

The above method varies with the hardness of the ripened specified cheese. For harder cheeses, the step of heating the composition is preferably performed at a temperature higher than 85°C but lower than 100°C.

A further example of a cheese product that may be manufactured with the method of the invention relates to a cheese mousse or cheese-based Bavarian cream. This cheese mousse may advantageously be prepared with the following method, in which the characteristic flavour of the employed cheese is well-preserved in the final cheese product. The cheese mousse is prepared via the steps of:
- S1 providing a specified ripened cheese to an amount of about 40-70% by final weight of the cheese mousse;
- S2 providing the additional ingredient composed of: cream to an amount of about 20-45% by final weight of the cheese mousse; a binding agent to an amount of about 0.5-2% by final weight of the cheese mousse, an alcohol-containing portion (with a preferred alcohol content of about 19-45 vol%) to an amount of about 5-15% by final weight of the cheese mousse and optionally pepper to an amount of about 0.5% by final weight of the cheese mousse;
- S3 heating the cheese to a first temperature of about 70-100°C, preferable 75-96°C, adjusted for the hardness of the cheese with softer cheeses requiring a lower temperature than harder cheeses, and optionally also heating the cream to the first temperature (not above 100°C to prevent phase separation of the cream and/or the cheese which results in reduced binding and reduced potential for aeration);

- optionally, step S8 of adding salt to an amount of about 0.5-3% by final weight of the cheese;
- S4 mixing the composition to obtain a mixture until the mixture is substantially homogenous, which step is preferably subdivided as follows: combining the heated cheese with the optionally heated cream and adding the binding agent and optionally the pepper to obtain a composition, cooling the composition to a temperature in a range of 30°C to 50°C, more preferably of about 40°C, adding the alcohol-containing portion of the additional ingredient to the composition (this sub-step preferably follows the cooling sub-step so that alcohol evaporation is reduced) and further mixing until a substantially homogeneous mixture is obtained;
- S5, S5a cooling the mixture, preferably to a second temperature of about 2-5°C (particularly favourable for expanding the mixture by aeration); and
- aerating the homogenous mixture, preferably at the second temperature, preferably using a planetary mixer, to obtain the cheese mousse, thereby expanding the mixture preferably by a factor of about 1.2-2.5 in volume.

After step S5, S5a, an intermediate product is obtained without aerating. This intermediate product may be packaged and shipped (preferably while being kept at the second temperature) to an end user who may continue the process of preparing the cheese mousse by performing the step of aerating the homogeneous mixture. Alternatively, the intermediate product may serve as an ingredient to prepare a dish or meal with or without aerating the intermediate product. This further demonstrates the versatility of the cheese products that can be obtained with the method according to the invention.

Further, the following optional steps may be employed individually or in combination once the cheese mousse is obtained:
- apportioning the cheese mousse into containers;
- vibrating the containers with the apportioned cheese mousse to remove any excessively large air pockets, for example on a vibratory conveyor;
- applying a topping to the cheese mousse, for example mango chutney, cranberry jam, red port jelly, apple jelly or union jam;
- S6 packaging the cheese product into the containers, preferably by sealing the containers containing the apportioned cheese product; and
- S7 cooling the containers containing the cheese product to a third temperature, wherein the third temperature is preferably lower than the second temperature by at least 15°C, more preferably below 0°C so that the step S7 of cooling comprises the step S9 of freezing the cheese product which at this point in the process may be packaged in the sealed containers. Cooling and/or freezing may advantageously be performed in a cooling/freezing tunnel.

The steps combined in the above process can be separated into distinct steps. Likewise, distinct steps can be integrated to reduce the number of process steps. The order of steps may also be changed where appropriate.

The cheese mousse has the advantageous properties of being suitable for freezing, that is, without losing its consistency after thawing. This advantageous effect is believed to arise from the combination of finely dispersed air bubbles within the cheese mousse, the stabilizing properties from cheese fat, cheese protein, cream fat and/or binding agent, and the heating temperature below 100°C preventing the cheese and the cream from phase-separating.

In addition to the freezability of the cheese product, it yet retains the characteristic flavour of the cheese it is made with. The alcohol-containing portion, like many cheeses a fermented product, serves to enhance this effect even further.

Particular variations of the cheese mousse may be obtained with the ingredients listed in the table below for recipes A-E. Amounts of the various components are given as mass-percentages relative to the final cheese product, unless indicated otherwise. In each case, the cream preferably has a fat content of at least 35-40%, and may be commercially available under names as double cream or whipping cream. Vegetarian options may also be employed.

| recipe | A | B | C | D | E |
|---|---|---|---|---|---|
| cheese | 50% Roquefort | 65% Camembert | 40% Parmesan | 45% hard sheep milk cheese | 70% soft goat milk cheese |
| additional ingredient | 38% cream | 22.5% cream | 45.5% cream | 40.3% vegetable cream | 20.3% vegetable cream |
| | 1% gelatine | 2% arrowroot | 0.5% carrageenan | 0.7% locust bean gum | 1.2% Irish moss |
| | 0.5% pepper | 0.5% pepper | 0.5% pepper | 0.5% pepper | 7% Cognac (45 vol% alcohol) |
| | 10% Licor 43™ (31 vol% alcohol) | 7% Calvados (40 vol% alcohol) | 12% Madeira (19 vol% alcohol) | 12% Floc de Gascogne (19 | |
| | | | | vol% alcohol) | |
| salt | 0.5% Himalayan salt | 3% fleur de sel | 1.5% sea salt | 1.5% sea salt | 1.5% sea salt |

The above recipes involve particular well-matched combinations of the cheese and the alcohol-containing portion of the additional ingredient so that the flavour of the cheese is retained well in the final cheese mousse. Further, recipes D and E are low or even free of lactose, free of gluten and vegetarian.

It is noted that the above recipes for cheese mousse are particularly favourable, though any combination of the listed components may be made. For example, the cream in recipes A-C may be substituted by the vegetable cream of recipes D-E and vice versa, the salt and/or pepper contents may be adjusted and the type of salt changed. Further, the alcohol-containing portion of the additional ingredient may be omitted without significantly affecting the physical properties of the final cheese mousse.

The above-described embodiments are intended only to illustrate the invention and not to limit in any way the scope of the invention. The scope of the invention is defined solely by the following claims.

## Claims

1. Method of manufacturing a cheese product (1) comprising a specified ripened cheese and a non-cheese additional ingredient, the method comprising the steps of:
- (S1) providing the cheese;
- (S2) providing the additional ingredient;
- (S3) heating at least the cheese to a first temperature;
- (S4) mixing the cheese with the additional ingredient to obtain a substantially homogeneous mixture; and
- (S5, S5a) cooling the mixture to a second temperature,
**characterized in that** the first temperature is selected in the range of 70°C to 100°C, preferably 70°C to 95°C, based on the hardness of the cheese to thereby bring the cheese in a spreadable state.

2. The method of claim 1, wherein the step (S1) of providing the cheese comprises assigning the cheese as either a soft-type cheese or a hard-type cheese and selecting the first temperature in the range of 85°C to 100°C, preferably 85°C to 95°C, when the cheese is a hard-type cheese, such as Cheshire, Emmental, Gouda, Gruyère, Pecorino and Parmesan.

3. The method of claim 1 or 2, wherein the step (S1) of providing the cheese comprises assigning the cheese as either a soft-type cheese or a hard-type cheese and selecting the first temperature in the range of 70°C to 85°C, preferably 75°C to 85°C, when the cheese is a soft-type cheese, such as Camembert, Brie, Neufchâtel, Havarti, Epoisses, Munster, young goat milk cheese, Stilton and Roquefort.

4. The method of any of the preceding claims, wherein the step (S1) of providing the cheese comprises providing the cheese to an amount of 30% to 80%, preferably of 35% to 70% and more preferably of 40% to 60%, by weight of the cheese product (1).

5. The method of any of the preceding claims, wherein the step (S2) of providing the additional ingredient excludes providing melting salts.

6. The method of any preceding claim, further comprising a step (S6) of packaging the cheese product (1) into containers (2).

7. The method of any preceding claim, further comprising a step (S7; S9) of cooling the cheese product (1) to a third temperature that is lower than the second temperature.

8. The method of any of the preceding claims, wherein the step (S4) of mixing the cheese with the additional ingredient comprises blending.

9. The method of any preceding claim, wherein the step (S2) of providing the additional ingredient comprises providing at least one of a cream and a binding agent, wherein the cream preferably has a fat content of at least 35-40%.

10. The method of any preceding claim, wherein the method further comprises a step of aerating the mixture.

11. The method of claim 10, wherein the step of aerating the mixture is performed at the second temperature, wherein the second temperature is preferably in the range of 2°C to 5°C.

12. The method of any preceding claim, wherein the additional ingredient comprises an alcohol-containing portion and the step (S4) of mixing the cheese with the additional ingredient comprises adding to the alcohol-containing portion to the mixture when the mixture has cooled from the first temperature to a temperature in a range of 30°C to 50°C, more preferably of about 40°C.

13. The method of any of the preceding claims, followed by a step (S9) of freezing the cheese product (1).

14. Cheese product (1) manufactured according to the method of any of the preceding claims.

15. Container (2) containing the cheese product (1) manufactured according to the method of any of the claims 1 to 13.
